# EUROPEAN PATENT SPECIFICATION

(11) **EP 3 504 010 B1**
(45) Date of publication and mention of the grant of the patent: **29.11.2023**
(21) Application number: 17844371.9
(22) Date of filing: 23.08.2017
(51) Int. Cl.: A01M 17/00, A01M 13/00, A01N 25/06, A01N 43/78, A23B 7/144, A23L 3/34, B05B 7/00, B05B 7/16, B05B 9/08, B65D 83/00, A23L 3/3409

(54) **THERMAL INJECTION SYSTEM AND METHOD OF USE**
SYSTEM ZUM THERMISCHEN SPRITZEN UND VERFAHREN ZUR VERWENDUNG
SYSTÈME D'INJECTION THERMIQUE ET PROCÉDÉ D'UTILISATION

(30) Priority: 24.08.2016 US 201662379191 P
(43) Date of publication of application: 03.07.2019
(73) Proprietor: United Phosphorus, Ltd. And Its Subsidiary Decco US Post-Harvest, Inc., Monrovia, CA 91016-0120 (US)
(72) Inventor: DIAMANT, Brian, Monrovia CA 91016-0120 (US); SEYMORE, Travis, Monrovia CA 91016-0120 (US)
(74) Representative: Tombling, Adrian George
(86) International application number: PCT/US2017/048287
(87) International publication number: WO 2018/039387

(56) References cited:
- US-A- 3 633 825
- US-A- 4 226 179
- US-A- 6 068 888
- US-A- 6 068 888
- US-A1- 2008 103 212
- US-A1- 2008 103 212
- US-A1- 2009 101 669
- US-A1- 2013 091 757
- US-A1- 2013 181 064
- US-A1- 2014 191 057
- US-A1- 2014 191 057
- US-B1- 6 723 364
- US-B1- 6 723 364

## Description

### Cross Reference to Related Application

### Technical Field

Embodiments relate to methods of thermal fogging, thermal fogging systems for carrying out the methods, and cartridges for use in the methods.

### Background

Some agricultural formulations, such as pesticides, insecticides, antifungal agents, and the like, are applied to plants and produce using fogging devices. However, some pesticides, such as the antifungal agent, thiabendazole (TBZ), are formulated as powders or viscous fluids or thick pastes. As such, they must be diluted and/or heated to a target temperature to increase fluidity before being used in standard fogging equipment. Thus, it is currently necessary for an operator to dilute and/or heat such pesticides before use. Even with optimal handling and the use of personal protective equipment (PPE), such practices can result in undesirable operator and environmental exposure during use and/or subsequent clean up procedures.
US 2008/0103212 discloses a method of treating fruit in a storage enclosure with an aerosol of diphenylamine scale inhibitor comprising: collecting molten diphenylamine scald inhibitor in a reservoir, maintaining the temperature of the molten diphenylamine scald inhibitor in said reservoir at a temperature above about 90°C, and conveying said molten diphenylamine scald inhibitor from said reservoir through a heated conduit to an aerosol-generating device.
US 2009/101669 discloses an apparatus for dispensing a viscous material includes a dispenser body having an inlet and a discharge orifice. A valve element is mounted for movement in the dispenser body between an open position allowing flow from the discharges orifice, and a closed position preventing flow therefrom. An actuator is coupled to the valve element for actuation between the open and closed position. A heat exchanger having a serpentine passage and a heater is coupled thereto, wherein the heater is in thermal communication with the dispenser body.
US 6,723,364 B1 discloses a fog treatment method using a liquid composition for treating fruits and vegetables, characterised in that it consists in producing a fog treatment mist consisting of droplets having a temperature ranging between 200 and 280°C.
There is no disclosure of dispensing a predetermined amount of an agricultural formulation from a cartridge, wherein the agricultural formulation is partially fluidized by shear forces prior to heating via an inline heater.

### Brief Description of the Drawings

Embodiments will be readily understood by the following detailed description in conjunction with the accompanying drawings. Embodiments are illustrated by way of example and not by way of limitation in the figures of the accompanying drawings.
**Figure 1** illustrates an example of a cartridge dosing system that includes a cartridge, pump, and inline heater for use in various systems and methods disclosed herein, in accordance with various embodiments;
**Figure 2** illustrates the cartridge dosing system of **Figure 1** in use with a thermal fogging apparatus, in accordance with various embodiments;
**Figures 3A** and **3B** are a perspective view (**Figure 3A**) and an exploded view (**Figure 3B**) of a dosing cartridge for use with a thermal fogging apparatus, in accordance with various embodiments; and
**Figures 4A** and **4B** are two graphs illustrating the effectiveness of fumigation of lemons (**Figure 4A**) and oranges (**Figure 4B**) with IMZ/TBZ, in accordance with various embodiments.

### Detailed Description of Disclosed Embodiments

The invention is set out in the appended set of claims. In the following detailed description, reference is made to the accompanying drawings which form a part hereof, and in which are shown by way of illustration embodiments that may be practiced. It is to be understood that other embodiments may be utilized and structural or logical changes may be made without departing from the scope. Therefore, the following detailed description is not to be taken in a limiting sense, and the scope of embodiments is defined by the appended claims and their equivalents.

Various operations may be described as multiple discrete operations in turn, in a manner that may be helpful in understanding embodiments; however, the order of description should not be construed to imply that these operations are order dependent.

The description may use perspective-based descriptions such as up/down, back/front, and top/bottom. Such descriptions are merely used to facilitate the discussion and are not intended to restrict the application of disclosed embodiments.

The terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other.

For the purposes of the description, a phrase in the form "A/B" or in the form "A and/or B" means (A), (B), or (A and B). For the purposes of the description, a phrase in the form "at least one of A, B, and C" means (A), (B), (C), (A and B), (A and C), (B and C), or (A, B and C). For the purposes of the description, a phrase in the form "(A)B" means (B) or (AB) that is, A is an optional element.

The description may use the terms "embodiment" or "embodiments," which may each refer to one or more of the same or different embodiments. Furthermore, the terms "comprising," "including," "having," and the like, as used with respect to embodiments, are synonymous.

Embodiments herein provide systems and methods for precise, metered application of viscous agricultural formulations with a thermal fogging system. In various embodiments, viscous liquid and/or paste formulations may be dispensed in precisely metered doses from a pre-loaded cartridge, passed through an inline heating unit for liquefaction, and passed therefrom into a delivery system, such as a thermal fogging apparatus. In various embodiments, the methods and systems disclosed herein may allow an operator to apply an agricultural formulation, such as a pesticide, insecticide, fungicide, or the like, with greater accuracy and efficiency compared to conventional thermal fogging systems, and with a greatly reduced risk of exposure to the operator and environment.

As one of skill in the art will appreciate, most agricultural formulations must be used at a particular concentration for a particular duration of application to be effective. For example, in a thermal fogging application, an agricultural formulation will be applied via a thermal fogging device (1) for a predetermined period of time (2) to a predetermined volume of post-harvest produce (3) in an enclosed space having a predetermined volume in order to (4) deposit a desired amount of the agricultural formulation on the surface of the produce. For a given agricultural formulation, the chemical concentration of the formulation being applied may affect the duration of application, with lower chemical concentrations requiring longer application times in order to achieve a desired level of chemical deposition. Thus, increasing the chemical concentration of the agricultural formulation generally reduces the duration of application, and thus allows an operator to accomplish each thermal fogging application in a shorter period of time, thereby reducing cost.

However, with many agricultural formulations, there is an upper limit to the chemical concentration that may be used in a thermal fogging apparatus, since increasing the chemical concentration of the agricultural formulation increases the viscosity of the formulation. Because a thermal fogging apparatus generally can only apply a liquid formulation with a relatively low viscosity, such as less than about 0.4 Pa·s (400 centipoise (cP)), less than about 0.3 Pa·s (300 cP), or less than about 0.2 Pa·s (200 cP), there is an upper limit to the chemical concentration of the agricultural formulation that may be used. Additionally, viscous materials, such as viscous liquid and paste formulations having a viscosity of greater than about 0.5 Pa·s (500 cP), greater than about 0.7 Pa·s (700 cP), greater than about 1 Pa·s (1,000 cP), greater than about 2 Pa·s (2,000 cP), or greater than about 5 Pa·s (5,000 cP), are inherently difficult to discharge from storage containers, and are inherently difficult to accurately dispense.

To address these issues, viscous agricultural formulations such as pastes typically are mixed on site from powders to form a viscous liquid or paste, and are then heated prior to use in a thermal fogging apparatus to liquefy the formulation for subsequent aerosolization. In conventional methods, agricultural formulations are often mixed at the site of use and heated in an open heating container, such as a slow-cooker or crock-pot. However, the mixing of powder-based formulations at the site of use, and on-site heating (particularly open heating), carries a high risk of exposure for the operator and a high risk of accidental environmental release, even with appropriate use of personal protective equipment (PPE). Specifically, open "crock pot" heaters with high temperature fluids may be risky for the operator and the environment, as the fogging carrier and other chemical constituents may begin to evaporate during the heating process. Typically, the operator must stay in very close proximity to the chemical throughout the fogging process, and may be exposed to the hot agricultural formulation during set up, application, and during clean-up of utensils and apparatus when the thermal fogging process is complete.

Additionally, once an agricultural formulation has been mixed and heated to achieve a proper viscosity for aerosolization in a thermal fogging apparatus, it must be transferred to the thermal fogging apparatus, which further increases the risk of accidental exposure. Furthermore, because conventional methods involve the field dilution, mixing, and heating of various chemicals, these methods also require the use of various mixing utensils (bowl, mixer, stir sticks, measuring cups, etc.) that must later be cleaned and handled by the operator. These practices may expose the operator and other individuals to the chemical being prepared, as well as various diluents and solvents used in the process.

Thus, disclosed herein in various embodiments are methods of thermal fogging that address these issues. The method according to the invention is set out in claim 1 and includes dispensing a predetermined amount of an agricultural formulation from a cartridge, wherein the agricultural formulation has a viscosity of greater than about 0.5 Pa·s (500 cP) at room temperature, and wherein the agricultural formulation is partially fluidized by shear forces; using an inline heater to heat the predetermined amount of partially fluidized agricultural formulation to a predetermined temperature, wherein the agricultural formulation has a viscosity of less than about 0.4 Pa·s (400 cP) at or above 60°C (140 degrees Fahrenheit); and aerosolizing the agricultural formulation with a thermal fogging apparatus. In some embodiments, the agricultural formulation may have a viscosity of greater than about 0.7 Pa·s (700 cP), greater than about 1 Pa·s (1,000 cP), greater than about 2 Pa·s (2,000 cP), or even greater than about 5 Pa·s (5,000 cP) at room temperature. Additionally, in various embodiments, the agricultural formulation may have a viscosity of less than about 0.3 Pa·s (300 cP), or less than about 0.2 Pa·s (200 cP) at or above 60°C (140 degrees Fahrenheit).

In various embodiments, the agricultural formulation may include a pesticide, an insecticide, or an antifungal agent, and in particular embodiments, .the antifungal agent is thiabendazole (TBZ). In some embodiments, the predetermined temperature is about 60°C (140 degrees Fahrenheit). In various embodiments, using the thermal fogging apparatus includes dispensing the aerosolized agricultural formulation into an enclosed space, such as an enclosed space that contains one or more fruits or vegetables.

Also disclosed in various embodiments are thermal fogging systems for carrying out the methods described above. The thermal fogging system according to the invention is defined in claim 9 and includes a disposable or non-disposable cartridge that is pre-filled with the viscous, concentrated agricultural formulation. The agricultural formulation has a viscosity of greater than about 0.5 Pa·s (500 cP) at room temperature (such as about 0.7 Pa·s (700 cP), 1 Pa·s (1,000 cP), 2 Pa·s (2,000 cP), or even 5 Pa·s (5,000 cP) or more) and a viscosity of less than about 0.4 Pa·s (400 cP) at or above 60°C (140 degrees Fahrenheit) (such as about 0.3 Pa·s (300 cP), about 0.2 Pa·s (200 cP), or even less). The system also includes a piston operatively coupled to the disposable or non-disposable cartridge for metered dispensing of the agricultural formulation from the cartridge, and an inline heater in fluid communication with an outlet of the cartridge and configured to heat the dispensed agricultural formulation to about 60°C (140 degrees Fahrenheit). The system also includes a pump in fluid communication with the cartridge and/or inline heater for circulation of the agricultural formulation, a blower element that creates a hot air stream of greater than about 288°C (550 degrees Fahrenheit), and an injection mechanism for injecting the heated agricultural formulation into the hot air stream. The agricultural formulation is partially fluidized from shear forces. In particular embodiments, the agricultural formulation includes an antifungal agent, such as thiabendazole (TBZ).

Also disclosed in various embodiments are cartridges for use in the methods and systems described above. The inventive cartridge is defined in claim 14 and includes a substantially cylindrical member having an inner chamber and an outlet at a first axial end, a piston slidably and air-tightly disposed in the substantially cylindrical member at a second axial end, wherein the piston partially defines the inner chamber, the inner chamber being in fluid communication with the outlet, and a reinforcing ring circumscribing the first or second axial end of the substantially cylindrical member. The cartridge includes an agricultural formulation having a viscosity of greater than about 0.5 Pa·s (500 cP) at room temperature (such as about 0.7 Pa·s (700 cP), about 1 Pa·s (1,000 cP), about 2 Pa·s (2,000 cP), or about 5 Pa·s (5,000 cP), or even greater) and less than about 0.4 Pa·s (400 cP) at or above 60°C (140 degrees Fahrenheit) (such as about 0.3 Pa·s (300 cP) or less, or about 0.2 Pa·s (200 cP) or less). The agricultural formulation can be partially fluidized by shear forces. In some embodiments, the cartridge contains an antifungal agent, such as thiabendazole (TBZ).

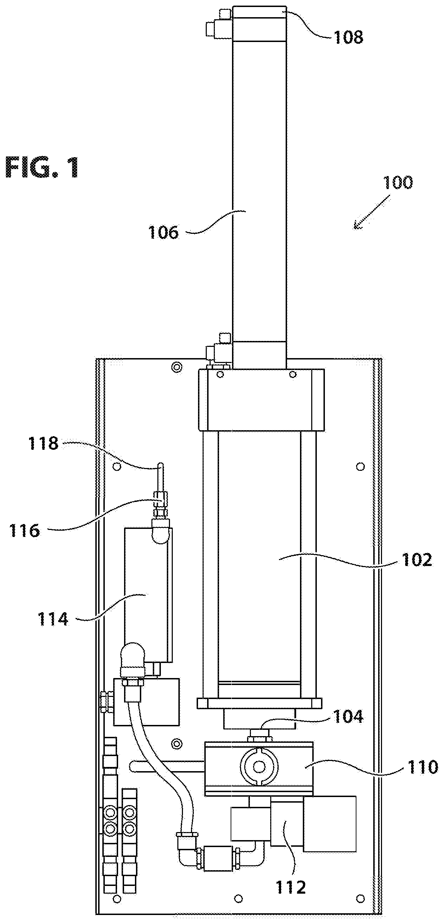

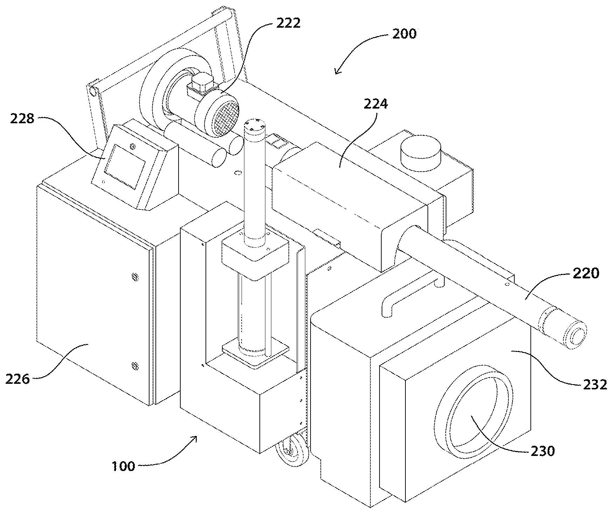

Turning now to the figures, **Figure 1** illustrates an example of a cartridge dosing system that includes a cartridge, pump, and inline heater for use in various systems and methods disclosed herein, in accordance with various embodiments. In the illustrated embodiment, the cartridge dosing system **100** includes a cartridge **102** that is pre-filled with a viscous liquid or paste agricultural formulation having a viscosity of greater than about 0.5 Pa·s (500 cP) at room temperature (such as about 0.7 Pa·s (700 cP), about 1 Pa·s (1,000 cP), about 2 Pa·s (2,000 cP), or about 5 Pa·s (5,000 cP), or even greater). The cartridge **102** includes a substantially cylindrical sidewall having an inner chamber and an outlet **104** at a first axial end, a piston (not shown) slidably and air-tightly disposed in the substantially cylindrical member at a second axial end, and the piston partially defines the inner chamber, the inner chamber being in fluid communication with the outlet **104**. In some embodiments, the cartridge may be mechanically, electrically, pneumatically, or hydraulically actuated.

In the illustrated embodiment, a cartridge actuator **106** is operably connected to the piston to advance the piston within the cartridge **102** and dispense the agricultural formulation through the outlet **104** in precisely metered doses. In various embodiments, a precision encoder (such as a linear variable displacement transformer (LVDT)) may be used to control the operation of the cartridge actuator **106**, and in some embodiments, a position sensor **108** may provide feedback to the precision encoder about the position of the cartridge actuator **106**. In use, the cartridge actuator **106** may apply axial pressure to the piston to cause the piston to slidably advance within the cartridge **102** and push the viscous agricultural formulation out of the cartridge **102**, through the outlet **104**.

According to the invention, the viscous agricultural formulation is partially fluidized by shear forces. In various embodiments, once the viscous agricultural formulation has passed through the outlet **104**, it enters a three-way flush valve **110**, where it is propelled forward by a positive displacement pump **112** and into an inline heater **114**, all of which lower the viscosity of the fluid. For example, some agricultural formulations (such as TBZ) may be non-Newtonian fluids at low temperatures. Thus, when shear is applied to these formulations, the viscosity of the formulation changes. In the case of TBZ, the viscosity decreases with shear or agitation, and when the viscous formulation is pushed through the small cartridge outlet **104**, the three-way flush valve **110**, and/or the pump **112**, the shear forces generated by these actions may fluidize the paste somewhat and lower the viscosity (e.g., from about 5 Pa·s (5,000 cP) to about 2 Pa·s (2,000 cP)) before it reaches the inline heater **114**. Hence, according to the invention, the viscous agricultural formulation is partially fluidized by shear forces generate by pushing it through the outlet **104** of the cartridge **102** and/or the pump **112**. The inline heater **114** heats the partially fluidized agricultural formulation to a predetermined temperature (e.g., about 60°C (140 degrees Fahrenheit)) and further reduces the viscosity of the agricultural formulation to less than about 0.4 Pa·s (400 cP), such as about 0.3 Pa·s (300 cP) or about 0.2 Pa·s (200 cP). In various embodiments, a computing system (not shown) may be used to enable precision temperature and dosing control. In the illustrated embodiment, once it has passed through the inline heater **114**, the fluidized agricultural formulation passes through a flow sensor **116** and a conduit **118** to a thermal fogging apparatus.

**Figure 2** illustrates the cartridge dosing system **100** of **Figure 1** in use with a thermal fogging apparatus **200**, in accordance with various embodiments. As illustrated in **Figure 2**, the liquefied agricultural formulation exits the inline heater **114**, flow sensor **116**, and conduit **118** of **Figure 1**, it is pumped directly into a standard thermal fogging apparatus **200**. Although the cartridge dosing system **100** illustrated in **Figures 1** and **2** is described as a precision dosing system for a thermal fogging device **200**, one of skill in the art will appreciate that the cartridge dosing system **100** may be adapted to deliver liquefied paste formulations to any device which requires precisely metered dosing of viscous ingredients that have been heated under highly controlled conditions. In the system illustrated in **Figure 2**, the thermal fogging apparatus **200** includes a blower mechanism **222** and an air heater **224** that generates a hot air stream of greater than about 288°C (550 degrees Fahrenheit). The heated, liquefied agricultural formulation is injected into the hot air stream via an injection mechanism that causes the agricultural formulation to be aerosolized and dispensed through a muzzle **220**. In various embodiments, the thermal fogging apparatus **200** also may include an electrical panel **226** and a user interface **228**, as well as an air intake **230** and a HEPA filter **232**.

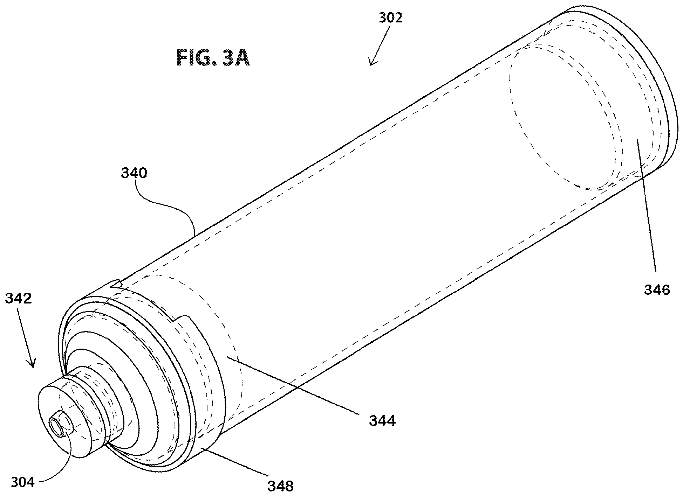

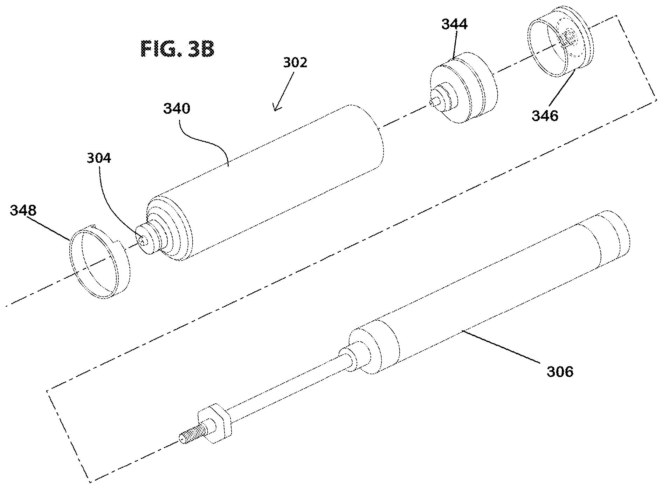

**Figures 3A** and **3B** are a perspective view (**Figure 3A**) and an exploded view (**Figure 3B**) of a dosing cartridge for use with a thermal fogging apparatus, in accordance with various embodiments. In the illustrated embodiment, cartridge **302** is pre-filled with a viscous liquid or paste agricultural formulation having a viscosity of greater than about 0.5 Pa·s (500 cP) at room temperature (such as about 0.7 Pa·s (700 cP), about 1 Pa·s (1,000 cP), about 2 Pa·s (2,000 cP), or about 5 Pa·s (5,000 cP), or even greater). The cartridge **302** includes a substantially cylindrical sidewall **340** forming an inner chamber, and an outlet **304** at a first axial end **342**, a piston **344** slidably and air-tightly disposed in the inner chamber, and the piston partially defines the inner chamber, the inner chamber being in fluid communication with the outlet **304**. In some embodiments, the cartridge may be mechanically, electrically, pneumatically, or hydraulically actuated.

In the illustrated embodiment, a cartridge actuator **306** is operably connected to the piston **344** to advance the piston **344** within the cartridge **302** and dispense the agricultural formulation through the outlet **304** in precisely metered doses. In use, the cartridge actuator **306** may apply axial pressure to the piston to cause the piston to slidably advance within the cartridge **302** and push the viscous agricultural formulation out of the cartridge **302**, through the outlet **304.** In some embodiments, a puck **346** may be disposed within the cartridge to provide support for and distribute load from the actuator **306** across a surface of the piston **344**. Additionally, one or more reinforcing rings **348** is positioned circumferentially about the first or second axial end to reinforce and support the sidewall **340** and prevent deformation of the cartridge **302** during operation.

In various embodiments, the systems and methods disclosed herein may use factory pre-mixed agricultural formulations, and such pre-mixed agricultural formulations may be prepared in a laboratory or factory setting, where environmental controls (fume hoods, ventilation systems, etc.) are available, as well as other safety equipment. In various embodiments, using factory pre-mixed agricultural formulations that have been factory pre-loaded into disposable or non-disposable cartridges may eliminate the need for on-site mixing, heating, and other field handling of the chemicals at the site of use. As described above, in various embodiments, the disclosed methods and systems may use computer-implemented metered dosing of the pre-mixed formulation directly from a cartridge into an inline heating apparatus via a pump, and directly into the thermal fogging device from the inline heater. Thus, in various embodiments, this closed system ensures that the operator and the environment are not accidentally exposed to the formulation. Thus, the presently disclosed systems and methods require minimal operator contact with the agricultural formulations. Additionally, the disclosed systems and methods provide greater temperature control than prior art "crock pot" heating methods provide, and dosing the agricultural formulation at a consistent temperature into the thermal fogging apparatus yields a consistent fog, with no operator adjustments required. Thus, the disclosed systems and methods minimize operator interaction with the agricultural formulation, and they provide safe and accurate dosing of viscous, non-flowing chemicals.

### EXAMPLES

### Example 1: IMZ/TBZ Fumigation Trial

This Example illustrates some of the difficulties and pitfalls associated with a thermal fogging application of an agricultural formulation, wherein the concentration of fungicide is too low to achieve optimal results with conventional technology. Drenching citrus fruit is an effective and economical way of treating large amounts of fruit in a short period of time; generally treating a truckload takes 3-5 minutes. Prompt treatment allows the fruit being protected by a fungicide during the de-greening and storage time or between picking and harvesting. During the operation, fungicide resistant spores and other pathogens accumulate in the drencher, which despite sanitation with chlorine still cause significant amount of decay and contamination, especially in lemon packinghouses. A fumigation test was conducted in order to study the efficacy of waterless fungicide application and to determine the amount of residue deposited via thermal fogging.

12 bins (900-lb, 400-Kg each) lemons and 8 bins of oranges equaling 8,000-Kg juice-grade fruit were used for this test. Several hundred lemons and oranges were inoculated with a 10⁶ spore/mL suspension of IMZ sensitive Penicillium, *digitatum* (green mold) 24 hours prior to treatment, and they were packed in 22-count mashed fruit nets. Imazalil (IMZ) and Thiabendazole (TBZ) were applied via conventional thermal fogging at a rate of 20g/ton IMZ and 15g/ton TBZ using a Swingtec Thermal Fogger SN101.

To prepare the fungicide mixture, a 2L stainless steel container was placed on a magnetic stirrer-equipped electric heater, and 300 mL of propylene glycol was poured in the container, and ca 200 g IMZ was added and stirred while heating. After the IMZ was dissolved, 150 g TBZ powder was added slowly to the mixer, and the temperature was increased to 90°C. The mixture was agitated until the TBZ was suspended homogeneously. An external pump was used for delivery of the liquid mixture to the fogger at about 80 ml/minute. The chemical was subjected to ca 500°C heat at the port of entry and evaporated instantaneously, cooling down to 60°C upon leaving the fogging tube. This higher rate was applied to compensate for the 90% empty space. For a full storage room, the application rate would have been 3 g/ton of either fungicide.

After seven minutes, the fumigation was completed and the entry hole was closed. After about two hours, the recirculation fans were started. The delay in recirculation was calculated to allow the fine chemical fumes to penetrate without any turbulence throughout the bins and to avoid the formation of larger particles.

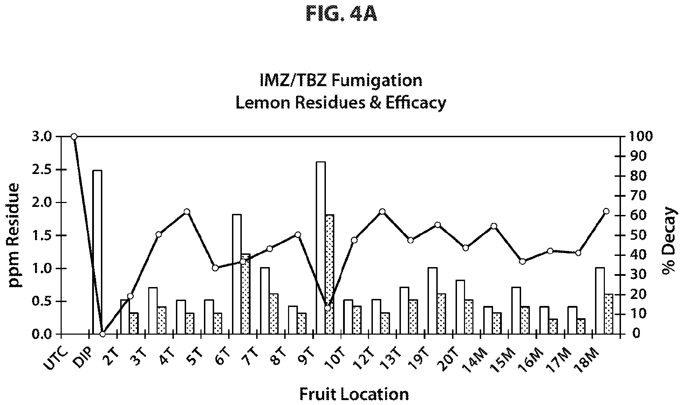

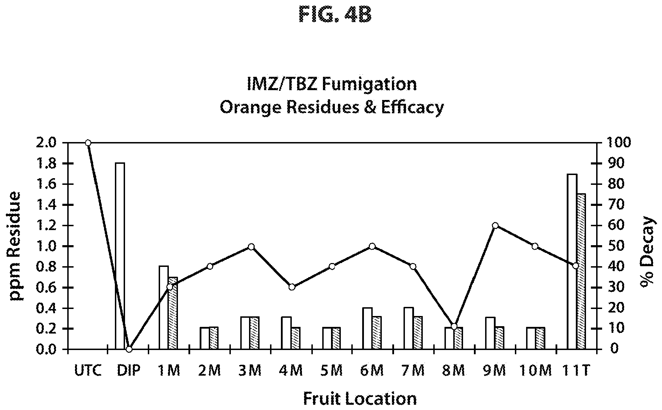

The storage room was opened after 20 hours, and the bagged fruit was removed from the bins for residue efficacy analysis and phytotoxicity checks. No phytotoxicity was observed in any of the fruits. **Figures 4A** and **4B** are two graphs illustrating the effectiveness of fumigation of lemons (**Figure 4A**) and oranges (**Figure 4B**) with IMZ/TBZ, in accordance with various embodiments. The digits represent the bin location and the letters the fruit location in the bin "T" for top layer and "M" for middle respectively. UTC= Untreated Check, DIP= 15s dip treatment in 200-ppm IMZ tank.

20 bins were fumigated in a 420-bin capacity storage room. For compensation of the void spaces and surfaces, four times more Imazalil and Thiabendazole was used than is typically required. Even this amount did not provide viable residues for disease control. The average residue was 0.4, 40% of generally assumed residue of 1-ppm required for decay control, ranging from 0.2 - 2.5 ppm depending on the location of the fruit. The highest residues were observed fruit located on top layer of the upper bin of the front row compare to residue in fruit dipped in 200 ppm Imazalil tank for 15s. The TBZ residues were corresponding to its ratio to imazalil. The efficacy in fumigated fruit was about 50% compare to the dipped ones. The only comparable residue to the dipped fruit was achieved in the fruit placed in the top of the 9^{th} bin that was closest one to the fogging machine. Fruit collected from this bin had residues of 2.5 ppm and disease control of almost 90%.

As for application rate and method, the formation of a relatively thick film of Imazalil, TBZ and propylene glycol was observed on the storage floor immediately in front of fumigation pipe, showing that a part of the fumes condensed immediately after leaving the fogger and were deposited on the floor. This was mostly due to the high application rate of 80 g per minute.

No staining or burning was observed on the treated fruits, which indicates that this application method is not phytotoxic to the fruit. Compared to drenching, thermal fogging is less costly and faster, especially since the elimination of water can be advantageous for decay reduction and environmental friendliness (water contamination, no chlorine, no salts, no pathogen accumulation, etc.) However, deposition of sufficient amounts of the agricultural formulation was not achieved.

### Example 2: Effect of TBZ Concentration on Viscosity

This Example illustrates the nonlinear relationship between concentration and viscosity in an agricultural formulation. TBZ formulations were generated with a range of different concentrations of TBZ in dipropylene glycol, and viscosity and storage characteristics of the formulations were observed over time.

At concentrations of less than about 200 g/L, the formulation initially formed a suspension, but the suspension began to separate when agitation was discontinued. These formulations separated into two layers: TBZ and solvent. Specifically, the TBZ precipitated, and because of its small particle size, the precipitate formed a compact mass that was difficult to resuspend, even with prolonged, vigorous agitation.

In formulations having concentrations of greater than about 250 g/L, the mixture formed a uniform paste that did not separate and form a precipitate layer during storage in the absence of agitation. Thus, at concentrations of greater than about 250 g/L, the particles of TBZ remained in solution and did not precipitate. No compact precipitate mass formed, and no agitation was needed to maintain the uniform consistency of the paste.

### Example 3: Formulation of a TBZ-based agricultural formulation

This Example illustrates the formulation of one example of a viscous agricultural formulation for use in the systems and methods described herein, for example for use in a thermal fogging method for the prevention of fungal growth in citrus fruits. The final formulation includes 22.8% thiabendazole (TBZ) and 77.2% dipropylene glycol, and in the present Example, is provided in an 840 gallon batch.

Dipropylene glycol was transferred into a mixing tank equipped with a ribbon blender. Mixing was initiated at the maximum speed. The TBZ powder was gradually added into the tank in small portions to keep dust to a minimum until the entire amount had been added. Mixing was continued for 10 minutes and the temperature was monitored. During the wetting process, the mixture heats up. Stabilization of temperature at about 33°C (92 degrees Fahrenheit) was confirmed.

After ten minutes of mixing, temperature was recorded every two minutes until the temperature stayed within one degree of the previous measurement. A sample as submitted to a QC lab for analysis, and after QC confirmation, the product was loaded into cartridges while being agitated. Each cartridge was loaded with 68.6 fl oz / 2032mL.

### Example 4: Thermal Fogging Procedure

This Example provides an exemplary thermal fogging procedure. The room where the fogging is to occur is checked for any areas where potential leaks can occur. These areas are sealed in order to reduce fog drift. All fans are turned off prior to application. No additional chemicals applications should be running at the time of fogging. If there is no fogger access port in the doors or walls, utilization of a tarp is necessary. Using an industrial grade tape, the tarp is secured to the bottom of the door. Additional tape is used along the sides to prevent leaks. Warning signs are placed to prohibit anyone from entering the room during treatment, recirculation, and through completion of the reentry procedure.

The thermal fogging apparatus is placed in the center of the room. If there is an uneven number of bins across the width of the room, the thermal fogging apparatus is offset by ½ bin width. The nozzle of the thermal fogging apparatus is placed in the access port, the compressor and HEPA filter switches are actuated, and the controller is turned on. A new pre-filled cartridge containing a viscous agricultural formulation is inserted into the thermal fogging apparatus. The dosing calculation method is selected by the operator and the required data is entered into the user interface for precision dosing based off of label recommendations for the agricultural formulation. Dosing and fogging operations are initiated.

If necessary, the HEPA filter is adjusted during the thermal fogging procedure to reduce room pressure and chemical drift. If necessary, the cartridge may be replaced during a thermal fogging procedure, replacing the spent cartridge with a new one. The thermal fogging apparatus undergoes a cleaning and cooling cycle, after which the apparatus may be separated from the room. After 15 minutes, recirculation fans are started, and they are allowed to run for two hours. The cooling system may be restarted two hours after the application is complete. After the recirculation time is complete and two hours of mechanical ventilation have elapsed, the facility may be reentered.

### Example 5: Thiabendazole- Magnitude of Residue on Fumigated Citrus

This Example demonstrates the determination of the magnitude of TBZ residue deposition on citrus following a thermal fogging application using an external heating/mixing chamber for the TBZ formulation. Citrus can be held in regular or moderately refrigerated storage rooms for degreening purposes up to 5 days following harvest. Short term exposure of citrus to the temperatures used in these storages commonly induces a decay caused by several pathogens. Thiabendazole (TBZ) is a federally registered substance for use on citrus to reduce decay on citrus while in storage The EPA residue tolerance for this pesticide on citrus fruits is 10-ppm. TBZ is most commonly applied as a postharvest drench treatment; however, the aqueous application of TBZ generates huge amounts of hazardous waste, which must be disposed of according to federal and local laws and regulations. In addition, the reuse and recirculation of the liquid leads to accumulation of pathogens in the drencher, which increases the disease incident and consequently higher decay rates in the stored fruit. To avoid these problems and speed up the treatment and storage of harvested citrus, an application process was developed for application of TBZ by thermal fogging or fumigation. TBZ can be easily suspended in a suitable adjuvant (solvent) like propylene glycol or dipropylene glycol for this type of application.

The test site consisted of treated fruits only. Untreated fruits were collected from field bins and separated from treated fruit. The fruit amount was of adequate size to ensure a commercial application. The test site was an 800-bin capacity cold storage, filled with 400 bins of citrus containing each approximately 900 pounds of lemons, oranges or satsumas. The room met industry standards for storing citrus at a defined temperature and concentration of moisture. The fruits were delivered from the field in wooden or plastic bins. Upon arrival, they were placed in the storage room. After filling; the storage room was closed and prepared for fumigation.

The test substance was 2-(4-thiazolyl)-benzimidazole (thiabendazole / TBZ 99.5%), EPA Reg. No. 2792-50. The application was carried out using a Swingfog Thermal Fogger equipped with an external pump and an electrical heater furnished with a magnetic stirrer. 2,500 mL of dipropylene glycol was transferred into a 5000-mL stainless steel container. The container was placed on the hot plate and heating and mixing was initiated. When the temperature reached 60°C, the already pre-weighed 818 (5mg/kg x164, OOOkg) TBZ was added to the container and heated to 100 -110°C. Heat-resistant pump tubing was inserted into the hot TBZ suspension and the pump was started. After the fumigation, the thermal fogging apparatus was removed from the storage room and the opening was closed. After 45-60 minutes, the recirculation fans were turned on.

Residue was measured by collecting two untreated samples from each variety. 16 hours after the application, the storage room was opened and six samples were collected from treated bins. A minimum of 16 fruit were collected per sample, and the location of the bins was noted. Fruit was taken from 4-5 layers deep in the bin.

During sampling, clean gloved hands were used, and the gloves were changed to prevent transfer of pesticide residue from one sample to another. Sample preparation from the untreated fruit was completed before treated fruit. All samples were placed in plastic-lined cloth bags.

Although certain embodiments have been illustrated and described herein, it will be appreciated by those of ordinary skill in the art that a wide variety of alternate and/or equivalent embodiments or implementations calculated to achieve the same purposes may be substituted for the embodiments shown and described without departing from the scope. Those with skill in the art will readily appreciate that embodiments may be implemented in a very wide variety of ways. This application is intended to cover any adaptations or variations of the embodiments discussed herein. Therefore, it is manifestly intended that embodiments be limited only by the claims and the equivalents thereof.

## Claims

1. A method of thermal fogging, comprising:
dispensing a predetermined amount of an agricultural formulation through the outlet (104; 304) of cartridge (102; 302) using a piston operatively coupled to the cartridge (102; 302),
wherein the agricultural formulation has a viscosity of greater than about 0.5 Pa·s (500 cP) at room temperature,
propelling forward the agricultural formulation by a positive displacement pump (112),
wherein the agricultural formulation is partially fluidized by shear forces generated by pushing the viscous agricultural formulation through the outlet (104; 304) and/or the pump (112);
using an inline heater (114) to heat the predetermined amount of partially fluidized agricultural formulation to a predetermined temperature, wherein the agricultural formulation has a viscosity of less than about 0.4 Pa·s (400 cP) at or above 60°C (140 degrees Fahrenheit); and
aerosolizing the agricultural formulation with a thermal fogging apparatus (200).

2. The method of claim 1, wherein:
(1) the agricultural formulation has a viscosity of greater than about 0.7 Pa·s (700 cP) at room temperature;
(2) the agricultural formulation has a viscosity of greater than about 2 Pa·s (2,000 cP) at room temperature; or
(3) the agricultural formulation has a viscosity of greater than about 5 Pa·s (5,000 cP) at room temperature.

3. The method of claim 1, wherein the agricultural formulation has a viscosity of less than about 0.3 Pa·s (300 cP) at or above 60°C (140 degrees Fahrenheit).

4. The method of claim 1, wherein the agricultural formulation comprises an antifungal agent.

5. The method of claim 4, wherein the antifungal agent is thiabendazole (TBZ).

6. The method of claim 1, wherein the predetermined temperature is about 60°C (140 degrees Fahrenheit).

7. The method of claim 1, wherein using the thermal fogging apparatus (200) comprises dispensing the aerosolized agricultural formulation into an enclosed space.

8. The method of claim 7, wherein the enclosed space contains one or more fruits or vegetables.

9. A thermal fogging system for carrying out method of claim 1, comprising:
a cartridge (102; 302) comprising an agricultural formulation, wherein the agricultural formulation has a viscosity of greater than about 0.5 Pa·s (500 cP) at room temperature and a viscosity of less than about 0.4 Pa·s (400 cP) at or above 60°C (140 degrees Fahrenheit);
the cartridge (102; 302) comprising an outlet (104; 304);
a piston (344) operatively coupled to the cartridge for metered dispensing of the agricultural formulation from the cartridge through the outlet (104; 304);
an inline heater (114) in fluid communication with the outlet (104; 304) of the cartridge and configured to heat the dispensed agricultural formulation to about 60°C (140 degrees Fahrenheit);
a positive displacement pump (112) in fluid communication with the cartridge and the inline heater for circulation of the agricultural formulation;
a blower element (222) that creates a hot air stream of greater than about 288°C (550 degrees Fahrenheit); and
an injection mechanism for injecting the heated agricultural formulation into the hot air stream,
wherein the agricultural formulation is partially fluidized from shear forces generated by pushing the viscous agricultural formulation through the cartridge outlet (104; 304) and/or the pump (112).

10. The thermal fogging system of claim 9, wherein:
(1) the cartridge (102) comprises an agricultural formulation having a viscosity of greater than about 0.7 Pa.s (700 cP) at room temperature;
(2) the cartridge comprises an agricultural formulation having a viscosity of greater than about 2 Pa·s (2,000 cP) at room temperature; or
(3) the cartridge comprises an agricultural formulation having a viscosity of greater than about 5 Pa·s (5000cP) at room temperature.

11. The thermal fogging system of claim 9, wherein the agricultural formulation has a viscosity of less than about 0.3 Pa·s (300cP) at or above 60°C (140 degrees Fahrenheit).

12. The thermal fogging system of claim 9, wherein the agricultural formulation comprises an antifungal agent.

13. The thermal fogging system of claim 12, wherein the antifungal agent is thiabendazole (TBZ).

14. A cartridge (102) for use in the method of claim 1, the cartridge comprising:
a substantially cylindrical member (340) having an inner chamber and an outlet (304) at a first axial end (342);
a piston (344) slidably and air-tightly disposed in the substantially cylindrical member at a second axial end, wherein the piston partially defines the inner chamber, the inner chamber being in fluid communication with the outlet; and
a reinforcing ring (348) circumscribing the first or second axial end of the substantially cylindrical member;
wherein the cartridge comprises an agricultural formulation having a viscosity of greater than about 0.5 Pa s (500 cP) at room temperature and less than about 0.4 Pa s (400 cP) at or above 60°C (140 degrees Fahrenheit), and wherein the agricultural formulation can be partially fluidized by shear forces generated by pushing the agricultural formulation through the outlet (304).

15. The cartridge (102) of claim 14, wherein the agricultural formulation comprises an antifungal agent, wherein optionally the antifungal agent is thiabendazole (TBZ).

## Patentansprüche

1. Verfahren zum thermischen Vernebeln, das aufweist:
Abgeben einer vorgegebenen Menge einer landwirtschaftlichen Formulierung durch den Auslass (104; 304) einer Kassette (102; 302) unter Verwendung eines betriebsfähig mit der Kassette (102; 302) gekoppelten Kolbens,
wobei die landwirtschaftliche Formulierung bei Raumtemperatur eine Viskosität von mehr als etwa 0,5 Pa·s (500 cP) hat,
Vorwärtsbefördern der landwirtschaftlichen Formulierung durch eine Verdrängerpumpe (112),
wobei die landwirtschaftliche Formulierung durch Scherkräfte teilweise fluidisiert wird, welche erzeugt werden, indem die viskose landwirtschaftliche Formulierung durch den Auslass (104; 304) und/oder die Pumpe (112) gedrückt wird;
Verwenden einer Inline-Heizung (114), um die vorgegebene Menge der teilweise fluidisierten landwirtschaftlichen Formulierung auf eine vorgegebene Temperatur zu erwärmen, wobei die landwirtschaftliche Formulierung bei oder über 60°C (140 Grad Fahrenheit) eine Viskosität von weniger als etwa 0,4 Pa·s (400 cP) hat; und
Aerosolieren der landwirtschaftlichen Formulierung mit einer thermischen Vernebelungsvorrichtung (200).

2. Verfahren nach Anspruch 1, wobei:
(1) die landwirtschaftliche Formulierung bei Raumtemperatur eine Viskosität von mehr als etwa 0,7 Pa·s (700 cP) hat;
(2) die landwirtschaftliche Formulierung bei Raumtemperatur eine Viskosität von mehr als etwa 2 Pa s (2000 cP) hat; oder
(3) die landwirtschaftliche Formulierung bei Raumtemperatur eine Viskosität von mehr als etwa 5 Pa s (5000 cP) hat.

3. Verfahren nach Anspruch 1, wobei die landwirtschaftliche Formulierung bei oder über 60°C (140 Grad Fahrenheit) eine Viskosität von weniger als etwa 0,3 Pa·s (300 cP) hat.

4. Verfahren nach Anspruch 1, wobei die landwirtschaftliche Formulierung ein Fungizid aufweist.

5. Verfahren nach Anspruch 4, wobei das Fungizid Thiabendazol (TBZ) ist.

6. Verfahren nach Anspruch 1, wobei die vorgegebene Temperatur etwa 60°C (140 Grad Fahrenheit) ist.

7. Verfahren nach Anspruch 1, wobei die Verwendung der thermischen Vernebelungsvorrichtung (200) das Abgeben der aerosolierten landwirtschaftlichen Formulierung in einen geschlossenen Raum aufweist.

8. Verfahren nach Anspruch 7, wobei der geschlossene Raum eine oder mehrere Früchte oder Gemüse enthält.

9. Thermisches Vernebelungssystem zur Ausführung des Verfahrens von Anspruch 1, das aufweist:
eine Kassette (102; 302), die eine landwirtschaftliche Formulierung aufweist, wobei die landwirtschaftliche Formulierung bei Raumtemperatur eine Viskosität von mehr als etwa 0,5 Pa·s (500 cP) hat und bei oder über 60°C (140 Grad Fahrenheit) eine Viskosität von weniger als etwa 0,4 Pa·s (400 cP) hat;
wobei die Kassette (102; 302) einen Auslass (104; 304) aufweist;
einen Kolben (344), der für die dosierte Abgabe der landwirtschaftlichen Formulierung aus der Kassette durch den Auslass (104; 304) betriebsfähig mit der Kassette gekoppelt ist;
eine Inline-Heizung (114) in einer Fluidverbindung mit dem Auslass (104; 304) der Kassette, die konfiguriert ist, um die abgegebene landwirtschaftliche Formulierung auf etwa 60°C (140 Grad Fahrenheit) zu erwärmen;
eine Verdrängerpumpe (112) in einer Fluidverbindung mit der Kassette und der Inline-Heizung für die Zirkulation der landwirtschaftlichen Formulierung;
ein Gebläseelement (222), das einen Heißluftstrom von mehr als etwa 288°C (550 Grad Fahrenheit) erzeugt; und
einen Einspritzmechanismus zum Einspritzen der erwärmten landwirtschaftlichen Formulierung in den Heißluftstrom,
wobei die landwirtschaftliche Formulierung durch Scherkräfte, die erzeugt werden, indem die viskose landwirtschaftliche Formulierung durch den Kassettenauslass (104; 304) und/oder die Pumpe (112) gedrückt wird, teilweise fluidisiert wird.

10. Thermisches Vernebelungssystem nach Anspruch 9, wobei:
(1) die Kassette (102) eine landwirtschaftliche Formulierung mit einer Viskosität bei Raumtemperatur von mehr als etwa 0,7 Pa·s (700 cP) aufweist;
(2) die Kassette eine landwirtschaftliche Formulierung mit einer Viskosität bei Raumtemperatur von mehr als etwa 2 Pa s (2000 cP) aufweist; oder
(3) die Kassette eine landwirtschaftliche Formulierung mit einer Viskosität bei Raumtemperatur von mehr als etwa 5 Pa s (5000 cP) aufweist.

11. Thermisches Vernebelungssystem nach Anspruch 9, wobei die landwirtschaftliche Formulierung bei oder über 60°C (140 Grad Fahrenheit) eine Viskosität von weniger als etwa 0,3 Pa·s (300 cP) hat.

12. Thermisches Vernebelungssystem nach Anspruch 9, wobei die landwirtschaftliche Formulierung ein Fungizid aufweist.

13. Thermisches Vernebelungssystem nach Anspruch 12, wobei das Fungizid Thiabendazol (TBZ) ist.

14. Kassette (102) für die Verwendung in dem Verfahren von Anspruch 1, wobei die Kassette aufweist:
ein im Wesentlichen zylindrisches Element (340) mit einer Innenkammer und einem Auslass (304) an einem ersten axialen Ende (342);
einen Kolben (344), der verschiebbar und luftdicht an einem zweiten axialen Ende in dem im Wesentlichen zylindrischen Element angeordnet ist, wobei der Kolben die Innenkammer teilweise definiert, wobei die Innenkammer in einer Fluidverbindung mit dem Auslass steht; und
einen Verstärkungsring (348), der das erste oder zweite axiale Ende des im Wesentlichen zylindrischen Elements abgrenzt;
wobei die Kassette eine landwirtschaftliche Formulierung mit einer Viskosität bei Raumtemperatur von mehr als etwa 0,5 Pa·s (500 cP) hat und einer Viskosität bei oder über 60°C (140 Grad Fahrenheit) von weniger als etwa 0,4 Pa s (400 cP) aufweist, und wobei die landwirtschaftliche Formulierung durch Scherkräfte teilweise fluidisiert werden kann, die erzeugt werden, indem die viskose landwirtschaftliche Formulierung durch den Auslass (304) gedrückt wird.

15. Kassette (102) nach Anspruch 14, wobei die landwirtschaftliche Formulierung ein Fungizid aufweist, wobei das Fungizid wahlweise Thiabendazol (TBZ) ist.

## Revendications

1. Procédé de nébulisation thermique, comprenant :
la distribution d'une quantité prédéterminée d'une formulation agricole à travers la sortie (104, 304) d'une cartouche (102 ; 302) à l'aide d'un piston couplé fonctionnellement à la cartouche (102 ; 302),
dans lequel la formulation agricole a une viscosité supérieure à environ 0,5 Pa·s (500 cP) à température ambiante,
la propulsion vers l'avant de la formulation agricole par une pompe à déplacement positif (112),
dans lequel la formulation agricole est partiellement fluidisée par des forces de cisaillement générées en poussant la formulation agricole visqueuse à travers la sortie (104 ; 304) et/ou la pompe (112) ;
l'utilisation d'un réchauffeur en ligne (114) pour chauffer la quantité prédéterminée de formulation agricole partiellement fluidisée à une température prédéterminée, dans lequel la formulation agricole a une viscosité inférieure à environ 0,4 Pa·s (400 cP) à ou au-dessus de 60 °C (140 degrés Fahrenheit) ; et
l'aérosolisation de la formulation agricole avec un appareil de nébulisation thermique (200).

2. Procédé selon la revendication 1, dans lequel :
(1) la formulation agricole a une viscosité supérieure à environ 0,7 Pa·s (700 cP) à température ambiante ;
(2) la formulation agricole a une viscosité supérieure à environ 2 Pa·s (2000 cP) à température ambiante ; ou
(3) la formulation agricole a une viscosité supérieure à environ 5 Pa·s (5000 cP) à température ambiante.

3. Procédé selon la revendication 1, dans lequel la formulation agricole a une viscosité inférieure à environ 0,3 Pa·s (300 cP) à ou au-dessus de 60 °C (140 degrés Fahrenheit).

4. Procédé selon la revendication 1, dans lequel la formulation agricole comprend un agent antifongique.

5. Procédé selon la revendication 4, dans lequel l'agent antifongique est du thiabendazole (TBZ).

6. Procédé selon la revendication 1, dans lequel la température prédéterminée est d'environ 60 °C (140 degrés Fahrenheit).

7. Procédé selon la revendication 1, dans lequel l'utilisation de l'appareil de nébulisation thermique (200) comprend la distribution de la formulation agricole aérosolisée dans un espace clos.

8. Procédé selon la revendication 7, dans lequel l'espace clos contient un ou plusieurs fruits ou légumes.

9. Système de nébulisation thermique pour réaliser le procédé selon la revendication 1, comprenant :
une cartouche (102 ; 302) comprenant une formulation agricole, dans lequel la formulation agricole a une viscosité supérieure à environ 0,5 Pa·s (500 cP) à température ambiante et une viscosité inférieure à environ 0,4 Pa·s (400 cP) à ou au-dessus de 60 °C (140 degrés Fahrenheit) ;
la cartouche (102 ; 302) comprenant une sortie (104 ; 304) ;
un piston (344) couplé fonctionnellement à la cartouche pour une distribution dosée de la formulation agricole depuis la cartouche à travers la sortie (104 ; 304) ;
un réchauffeur en ligne (114) en communication fluidique avec la sortie (104 ; 304) de la cartouche et configuré pour chauffer la formulation agricole distribuée à environ 60 °C (140 degrés Fahrenheit) ;
une pompe à déplacement positif (112) en communication fluidique avec la cartouche et le réchauffeur en ligne pour la circulation de la formulation agricole ;
un élément de ventilation (222) qui crée un courant d'air chaud supérieur à environ 288 °C (550 degrés Fahrenheit) ; et
un mécanisme d'injection pour injecter la formulation agricole chauffée dans le courant d'air chaud,
dans lequel la formulation agricole est partiellement fluidisée à partir de forces de cisaillement générées en poussant la formulation agricole visqueuse à travers la sortie de cartouche (104 ; 304) et/ou la pompe (112).

10. Système de nébulisation thermique selon la revendication 9, dans lequel :
(1) la cartouche (102) comprend une formulation agricole ayant une viscosité supérieure à environ 0,7 Pa·s (700 cP) à température ambiante ;
(2) la cartouche comprend une formulation agricole ayant une viscosité supérieure à environ 2 Pa·s (2000 cP) à température ambiante ; ou
(3) la cartouche comprend une formulation agricole ayant une viscosité supérieure à environ 5 Pa·s (5000 cP) à température ambiante.

11. Système de nébulisation thermique selon la revendication 9, dans lequel la formulation agricole a une viscosité inférieure à environ 0,3 Pa·s (300 cP) à ou au-dessus de 60 °C (140 degrés Fahrenheit).

12. Système de nébulisation thermique selon la revendication 9, dans lequel la formulation agricole comprend un agent antifongique.

13. Système de nébulisation thermique selon la revendication 12, dans lequel l'agent antifongique est du thiabendazole (TBZ).

14. Cartouche (102) destinée à être utilisée dans le procédé selon la revendication 1, la cartouche comprenant :
un organe sensiblement cylindrique (340) ayant une chambre interne et une sortie (304) au niveau d'une première extrémité axiale (342) ;
un piston (344) disposé de manière coulissante et étanche à l'air dans l'organe sensiblement cylindrique à une deuxième extrémité axiale, dans laquelle le piston définit partiellement la chambre interne, la chambre interne étant en communication fluidique avec la sortie ; et
un anneau de renforcement (348) entourant la première ou la deuxième extrémité axiale de l'organe sensiblement cylindrique ;
dans laquelle la cartouche comprend une formulation agricole ayant une viscosité supérieure à environ 0,5 Pa·s (500 cP) à température ambiante et inférieure à environ 0,4 Pa·s (400 cP) à ou au-dessus de 60 °C (140 degrés Fahrenheit), et dans laquelle la formulation agricole peut être partiellement fluidisée par des forces de cisaillement générées par la poussée de la formulation agricole à travers la sortie (304).

15. Cartouche (102) selon la revendication 14, dans laquelle la formulation agricole comprend un agent antifongique, dans laquelle éventuellement l'agent antifongique est du thiabendazole (TBZ).
